# EUROPÄISCHE PATENTSCHRIFT

(11) **EP 3 216 075 B1**
(45) Veröffentlichungstag und Bekanntmachung des Hinweises auf die Patenterteilung: **28.05.2025**
(21) Anmeldenummer: 15778604.7
(22) Anmeldetag: 17.09.2015
(51) Int. Cl.: H01M 8/021, H01M 8/0228, C25B 9/65, C25B 13/04

(54) **BIPOLARPLATTE FÜR ELEKTROCHEMISCHE ZELLEN SOWIE VERFAHREN ZUR HERSTELLUNG DERSELBEN**
BIPOLAR PLATE FOR ELECTROCHEMICAL CELLS AND METHOD FOR THE PRODUCTION THEREOF
PLAQUE BIPOLAIRE POUR CELLULES ÉLECTROCHIMIQUES ET SON PROCÉDÉ DE PRODUCTION

(30) Priorität: 03.11.2014 DE 102014016186
(43) Veröffentlichungstag der Anmeldung: 13.09.2017
(73) Patentinhaber: Precors GmbH, 52146 Würselen (DE)
(72) Erfinder: WEIßBECKER, Vitali, 52066 Aachen (DE); LEHNERT, Werner, 52351 Düren (DE); REIMER, Uwe, 52428 Jülich (DE)
(74) Vertreter: Gille Hrabal Partnerschaftsgesellschaft mbB Patentanwälte
(86) Internationale Anmeldenummer: PCT/DE2015/000466
(87) Internationale Veröffentlichungsnummer: WO 2016/070862

(56) Entgegenhaltungen:
- WO-A1-2015/074752
- KR-A- 20130 074 342

## Beschreibung

Die Erfindung betrifft eine beschichtete Bipolarplatte für elektrochemische Energiewandler, wie sie üblicherweise bei Brennstoff- und/oder Elektrolysezellen Verwendung findet. Die Erfindung betrifft ferner ein Verfahren zur Herstellung der erfindungsgemäßen beschichteten Bipolarplatte.

### Stand der Technik

Ein elektrochemischer Energiewandler (z.B. Brennstoffzelle oder Elektrolysezelle) umfasst zwei Elektroden (Anode und Kathode), die durch eine feste semipermeable Elektrolytmembran oder einen flüssigen Elektrolyten in einer inerten Faserstruktur elektrisch isolierend und mechanisch voneinander getrennt angeordnet sind und die sogenannte Membran-Elektroden-Einheit (engl. membrane electrode assembly = MEA) bilden. Dabei findet bei Brennstoffzellen an der Anode die Oxidationsreaktion und an der Kathode die Reduktionsreaktion statt, bei Elektrolyseuren umgekehrt. Als Elektrolyte können je nach Zellentyp ionenleitfähige Polymermembranen, gelöste Laugen oder Säuren, Alkalikarbonatschmelzen oder Keramiken dienen. Von beiden Seiten grenzt jeweils an die Elektrode eine poröse elektrisch leitfähige Gasdiffusionsschicht aus Kohlenstoffvlies/ -gewebe oder Metallschaum. Daran anschließend besitzt ein elektrochemischer Energiewandler beidseitig eine Bipolarplatte (auch Strömungsverteiler oder Stromabnehmerplatten, engl. current collector, genannt), die meist aus elektrisch leitfähigen Kohlenstoffkompositmaterialien oder Metallen sind.

Der Fokus liegt dabei auf Brennstoffzellen bzw. Elektrolyseuren, die mit einer festen Polymerelektrolytmembran betrieben werden. Dabei unterscheidet man zwischen Niedertemperatur-Polymerelektrolyt-Brennstoffzellen/Elektrolysezellen, die bei etwa 85 °C betrieben werden, und Hochtemperatur-Polymerelektrolyt-Brennstoffzellen/Elektrolysezellen, die im Temperaturbereich zwischen 120 und 180 °C arbeiten. Bei beiden Varianten fungiert als Elektrolyt eine Protonen- oder Hydroxidionenleitende Ionomermembran. Sie ist gasdicht und nicht elektronenleitend. Daran schließt sich an beiden Seiten jeweils eine Katalysatorschicht (Elektrode), eine poröse Gasdiffusionsschicht und eine Bipolarplatte an. Auf der Elektrodenoberfläche befinden sich stets drei Phasen (Katalysator als Elektronenleiter, Ionomer als Protonenleiter und Reaktant) im Kontakt. Die Reaktanten (bei Brennstoffzelle Wasserstoff und Sauerstoff und bei Elektrolysezellen Wasser) werden über die Kanalstruktur der Bipolarplatten zugeführt und mit Hilfe der porösen Gasdiffusionsschicht homogen über der Katalysatoroberfläche verteilt. Die Bipolarplatte hat die Aufgabe die elektrochemische Zelle mechanisch zu stabilisieren, die Reaktanten beidseitig zu- und abzuführen und den generierten elektrischen Strom abzuführen.

Bipolarplatten müssen demnach mechanisch stabil sein, da sie als mechanisch tragendes Element innerhalb von Brennstoffzellen und Elektrolyseuren thermischer Ausdehnung, hohen Anpressdrücken und in der mobilen Anwendung Vibrationen und Erschütterungen standhalten müssen. Bipolarplatten müssen auch eine hohe elektrische und thermische Leitfähigkeit besitzen, um effizient den generierten elektrischen Strom abzuführen und thermische Energie an das Kühlmedium abzugeben. Dazu müssen sie eine dichte Oberflächenbeschaffenheit aufweisen, um weder Reaktanten noch Elektrolyt aufzunehmen und um diese räumlich vom Kühlmedium zu trennen. Zudem wird über sie der Wasserhaushalt (Wasserzufuhr bei Elektrolyseuren und Wasseraustrag bei Brennstoffzellen) geregelt. Außerdem wird eine hohe Stabilität gegenüber elektrochemischer Korrosion bei hoher Temperatur und äußerem Potential benötigt. Dabei müssen Bipolarplatten u. a. konzentrierter Phosphorsäure bei Temperaturen bis zu 180 °C und elektrochemischen Potentialen bis ca. 2,2 V (vs. reversible Wasserstoffelektrode) standhalten. Die elektrochemische Korrosion an der Phasengrenze Bipolarplatte/Elektrolyt stellt dabei das entscheidende Kriterium bei der Materialauswahl von Bipolarplatten dar.

Stand der Technik ist aktuell sowohl für die Niedertemperatur- als auch für die Hochtemperatur-Anwendung die Verwendung von Graphit-Polymer-Kompositwerkstoffen. Dabei handelt es sich um organische Polymere wie beispielsweise Polypropylen, Polyphenylensulfid, phenolische und Vinylester-Harze mit Ruß oder Graphit-Partikeln, die eine deutliche Verbesserung der Robustheit sowie der Serienherstellung mittels Spritzgussverfahren oder Heißpressen gegenüber reinen graphitischen Materialien aufweisen.

Die Polymermatrix solcher Graphit-Polymer-Kompositwerkstoffe verbessert zwar durch elastische Eigenschaften die mechanische Stabilität, jedoch auf Kosten der elektronischen und thermischen Leitfähigkeit, da die Polymeranteile isolierend wirken. Zudem haben graphitbasierte Bipolarplatten eine relativ hohe Materialstärke (> 2 mm).

Hier liegen die enormen Vorzüge von metallischen Bipolarplatten. Diese können in der Regel durch einfache und preiswerte Herstellverfahren, wie beispielsweise Stanzen oder Hochdruckumformung, erzeugt werden. Ferner weisen sie eine gute Duktilität sowie eine deutlich höhere mechanische Stabilität gegen Stöße und Vibrationen auf, die nachteilig häufig zu Rissen und in Folge davon zu Verlust von Gasen führen können. Zudem besitzen sie für Ihre Anwendung in einer Brennstoffzelle oder in einem Elektrolyseur eine ausreichend hohe elektronische und thermische Leitfähigkeit.

Eine bedeutende Herausforderung von metallischen Bipolarplatten, denen bislang eine breite Einführung in die Brennstoffzellentechnologie verwehrt war, ist die Anfälligkeit der metallischen Materialien als Bipolarplatten gegen Korrosion in saurem/alkalischem und feuchtem Milieu.

Während bei Niedertemperatur-Brennstoffzellen/Elektrolyseuren mäßige Korrosionsbedingungen (Elektrolytkonzentration < 0,5 M H₂SO₄ bei ~ 85 °C) vorliegen, herrschen bei Hochtemperatur-Brennstoffzellen/Elektrolyseuren drastischere Bedingungen aufgrund der eingesetzten konzentrierten Phosphorsäure (bis 16 M) und der hohen Temperatur von bis zu 180 °C vor. Dies führt zum einen dazu, dass metallische Bipolarplatten im Kontakt mit dem Elektrolyt korrodieren und die freiwerdenden Metallionen nachteilig den Katalysator und die Polymerelektrolytmembran (Nafion^{®}- bzw. Polybenzimidazol-Membran) vergiften können. Bei der Niedertemperaturanwendung mit Nafion^{®}-Membranen ist die Abnahme der Protonenleitfähigkeit durch Einlagerung von Metallionen bereits untersucht worden. Eine weitere Korrosionserscheinung ist die Ausbildung von nicht bzw. unzureichend leitfähigen Passivierungsschichten (Metalloxide, -hydroxide, -phosphate) auf der Metalloberfläche einer Bipolarplatte, die mit einem Anstieg des elektrischen Kontaktwiderstands einhergehen. Auch dies ist für schwefelsaure Bedingungen (Nafion^{®}-Membran) bereits eingehend untersucht worden. Neben der hohen Betriebstemperatur ist auch das elektrochemische Potential ein entscheidender Einflussfaktor für Korrosion. Bei Brennstoffzellen können Potentiale von etwa 1 V auftreten, bei Elektrolyseuren sogar bis zu 2,2 V (vs. reversible Wasserstoffelektrode).

Die vorgenannten Nachteile der Korrosion können reduziert werden, indem beständige und elektronisch leitfähige Beschichtungen auf die metallische Bipolarplatte aufgetragen werden. Bekannt sind bislang Beschichtungen wie beispielsweise keramische Nitride und Carbide basierend auf Titan, Chrom, Aluminium, Silizium oder Zirkonium, graphitische oder goldbasierte Beschichtungen, hergestellt mittels physikalischer oder chemischer Gasphasenabscheidung (engl. physical/chemical vapor deposition, PVD/CVD). Literaturbekannt sind auch elektrochemische Abscheidungsprozesse von Metallboriden (z. B. NiCoB, Ni₂B oder Ni₃B), Gold oder leitfähigen organischen Polymeren, wie Polyanilin oder Polypyrrol. Bei allen Beschichtungsoptionen besteht die Schwierigkeit immer darin, defektfreie Schichten herzustellen, die eine hohe Langzeitstabilität mit sich bringen. Sogar kleinste Defekte wie Risse oder Löcher (engl. pinholes) führen dazu, dass sich der Elektrolyt unter der Beschichtung ausbreitet und zu Korrosionsschäden führt.

In KR 2013 0074342 A ist ein Verfahren zur Beschichtung einer metallischen Bipolarplatte mit Hilfe einer Suspension offenbart, die neben Graphen weitere Additive, wie beispielsweise leitfähige Polymere, aufweist.

Ferner wird in WO 2015/074752 A1 eine Graphenbeschichtung auf einer Bipolarplatte beschrieben, bei deren Herstellung eine Suspension von Graphenoxid (mit Wasserstoffperoxid behandelter Graphit) zusammen mit wenigstens einem Haftvermittler auf Edelstahl aufgetragen wird und im Nachgang einer thermischen Behandlung unterzogen wird.

Eine weitere Möglichkeit ist das Plattieren von Edelstahl als Bipolarplattenwerkstoff mit einer dünnen Niobschicht, die stabile und elektronisch-leitende Oxidschichten ausbildet und das Metall dadurch passiviert.

Grundsätzlich muss bei der Auswahl von Beschichtungen neben der chemischen und elektrochemischen Stabilität auch die elektrische Leitfähigkeit sowie der thermische Ausdehnungskoeffizient zwischen dem metallischen Bipolarplattenwerkstoff und dem aufgebrachten Beschichtungsmaterial berücksichtig werden, um Oberflächenrisse zu vermeiden.

Bipolarplatten in Polymerelektrolyt-Brennstoffzellen unterliegen elektrochemischer Korrosion aufgrund der sauren Umgebung sowie dem Einfluss von Temperatur und elektrochemischem Potential. Für so drastische Bedingungen lassen sich nur Edelmetalle wie Gold oder sehr seltene und teure Metalle wie Tantal, das bei den o. g. Bedingungen stabile und leitfähige Oxidschicht ausbildet, verwenden. Preiswerte Edelstähle und Nickel-Basis-Legierungen weisen hingegen zu hohe Korrosionsraten und/oder eine Ausbildung von nicht-leitfähigen Passivschichten auf. Dies führt zu einer relativ schnellen Leistungsabnahme und nachteilig zur Alterung der Brennstoffzelle.

Um die entscheidenden Vorteile von metallischen Bipolarplatten jedoch nutzen zu können, bedarf es einer kostengünstigen korrosionsbeständigen und elektronisch-leitfähigen Beschichtung sowie eines massentauglichen Beschichtungsverfahrens.

### Aufgabe und Lösung

Aufgabe der Erfindung ist es, eine weitere metallische Bipolarplatte für Nieder- oder Hochtemperatur Polymerelektrolyt-Brennstoffzellen/Elektrolyseure bereit zu stellen, die aufgrund einer geeigneten Beschichtung preiswert in der Herstellung, ausreichend stabil und korrosionsbeständig ist und zudem die notwendigen elektronischen und thermischen Leitfähigkeiten für die Anwendung in einem elektrochemischen Energiewandler aufweist.

Es ist ferner die Aufgabe der Erfindung, ein Verfahren zur Herstellung der vorgenannten metallischen Bipolarplatte für den Einsatz in einer Nieder- oder Hochtemperatur Polymerelektrolyt-Brennstoffzellen/Elektrolyseure bereit zu stellen.

Die Aufgaben der Erfindung werden gelöst durch eine Bipolarplatte gemäß Hauptanspruch, sowie durch ein Verfahren zu dessen Herstellung gemäß Nebenanspruch. Vorteilhafte Ausgestaltungen der Bipolarplatte oder des Herstellungsverfahrens finden sich in den darauf rückbezogenen Unteransprüchen.

### Gegenstand der Erfindung

Die Kernidee der Erfindung ist es, eine metallische Bipolarplatte mit einer Beschichtung, umfassend zumindest teilweise reduzierte Graphenoxid-Schichten (GO), zu versehen, welche einen wirksamen Korrosionsschutz von metallischen Werkstoffen darstellt und darüber hinaus ein einfaches und günstiges Beschichtungsverfahren ermöglicht.

Als geeignete Materialien für eine solche Bipolarplatte kommen alle bislang für Bipolarplatten üblichen metallischen Werkstoffe umfassend eisenbasierte Stähle, austenitische Edelstähle sowie Legierungen mit einem hohen Chrom-, Nickel- und/oder Molybdänanteilen und Zugaben von Niob, Titan und/oder Kupfer, Mangan, Wolfram, Tantal und Vanadium, Kupferlegierungen sowie Edelmetalle, wie Gold und Platin in Betracht.

Es hat sich herausgestellt, dass eine Beschichtung mit einem graphen-ähnlichen Material, welches aus einer oder mehreren zumindest teilweise reduzierten Graphenoxid-Schichten besteht, eine vielversprechende Option zur Korrosionsminderung von metallischen Werkstoffen ist. Eine solche Beschichtung weist vorteilhaft eine ausreichende Stabilität und die notwendige elektrische Leitfähigkeit für den Einsatz in einer elektrochemischen Zelle auf.

Unter Graphen wird in der Regel eine Monolage aus Kohlenstoff verstanden, die in einer Ebene 2-dimensional und hexagonal vernetzt vorliegt. Im Unterschied dazu liegt Graphit in einer 3-dimensionalen Struktur aus parallel verlaufenden, ebenen Schichten aus Graphen vor. Sowohl Graphen als auch Graphit sind elektrisch leitfähig.

Graphitoxid ist eine nicht stöchiometrische Verbindung aus Kohlenstoff, Sauerstoff und Wasserstoff. Wird Graphitoxid in einem polaren Lösungsmittel gelöst und durch Ultraschall behandelt, entsteht eine homogene kolloidale Suspension aus Flocken aus nicht leitfähigen monomolekularen Schichten (Graphenoxid).

Zur Herstellung der erfindungsgemäßen Beschichtung umfassend eine oder mehrere zumindest teilweise reduzierte Graphenoxid-Schichten wird eine chemische Synthese durchgeführt. Ausgehend von Graphit-Pulver wird zunächst ein Graphitoxid-Pulver hergestellt, welches anschließend über eine Ultraschalldispergierung in eine stabile Graphenoxid (GO)-Suspension überführt wird. Als stabil wird eine solche Suspension dann bezeichnet, wenn sie auch nach über 30 Tagen noch keine Sedimentation aufweist.

Durch eine Abscheidung dieser Suspension auf einem metallischen Trägersubstrat können dann einzelne dünne Graphenoxid-Schichten aufgetragen und anschließend zu zumindest teilweise reduziertem Graphenoxid (rGO) reduziert werden, welches im Folgenden als graphen-ähnliches Material bezeichnet werden.

Der Sauerstoffanteil in Graphenoxid liegt in der Größenordnung von 20 - 60 Gew.-%, insbesondere zwischen 25 Gew.-% und 50 Gew.-% (Rest Kohlenstoff) und kann je nach Reduktionsbedingungen nach der Reduktion in dem graphen-ähnlichen Material deutlich reduziert werden. Vorteilhaft ist eine Reduktion um mehr als 50 %, insbesondere um ca. 75 %. Die zumindest teilweise Reduktion des Graphenoxids zu Graphen in der Beschichtung wird im Rahmen dieser Erfindung als zumindest teilweise reduziertes Graphenoxid (rGO) und das Material der Beschichtung insofern als graphen-ähnlich bezeichnet. Die Reduktion des Sauerstoffanteils kann leicht über eine XPS-Messung überprüft werden, wobei die Abnahme der Intensität der C-OH und C=O Peaks als Maß für die Reduktion des Graphenoxid zu Graphen angesehen werden kann.

Die Schichtdicken der einzelnen abgeschiedenen Graphenoxid-Schichten variieren dabei je nach Anwendung, Abscheidungsverfahren und Konzentration der GO-Suspension und liegen in der Regel zwischen jeweils 10 nm und 1 µm. Für die Abscheidung sind insbesondere das Spray, - Dip- oder Spin-Coating-Verfahren geeignet.

Vorteilhaft erfolgen Beschichtungs- und Reduktionsschritt alternierend in mehreren aufeinanderfolgenden Verfahrensschritten solange, bis die gewünschte Schichtdicke erreicht wird.

Würden zunächst nur die Beschichtungsschritte bis zur gewünschten Schichtdicke erfolgen, müsste die sich anschließende Reduktion bis in größere Schichttiefen erfolgen, was regelmäßig schwerer zu realisieren ist. Je nach gewünschter Schichtdicke beträgt die GO-Konzentration beim Sprühverfahren typischerweise 0,5 - 5 mg/ml und beim Dip- und Spin-Coating etwa 5 - 10 mg/ml. Je nach Rahmenbedingungen für den Einsatz in Niedertemperatur- bzw. Hochtemperatur-Polymerelektrolyt-Brennsstoffzellen/Elektrolyseuren können die benötigten Schichtdicke variieren.

Für die zumindest teilweise Reduktion des aufgebrachten Graphenoxids kommen alle bislang bekannten Reduktionsmethoden (thermisch, chemisch, elektrochemisch und Laser-induziert) in Frage. Thermisch reduziertes Graphenoxid wird im Folgenden auch mit trGO abgekürzt. Durch die zumindest teilweise Reduktion werden die Graphenoxid-Schichten vorteilhaft für den Einsatz einer Bipolarplatte ausreichend elektrisch leitfähig. Als ausreichend leitfähig wird eine elektrische Leitfähigkeit von wenigstens 50 S/cm, vorzugsweise von mehr als 100 S/cm verstanden.

Bei Brennstoffzellen/Elektrolyseuren ist der Kontaktwiderstand zwischen Bipolarplatte und der anliegenden Gasdiffusionsschicht von entscheidender Bedeutung. Metallische Oberflächen neigen dazu an Luftsauerstoff und in Kontakt mit wässrigen sowie sauerstoffhaltigen Lösungen Passivschichten aufzubauen, die die elektronische Leitfähigkeit stark herabsetzen. Dieser Passivierungseffekt führt bei Brennstoffzellen und Elektrolyseuren bei der Verwendung von unbeschichteten metallischen Werkstoffen zu einer starken Leistungsabnahme.

Ein entscheidender Parameter für die erfindungsgemäße Beschichtung einer Bipolarplatte mit einem graphen-ähnlichen Material ist somit der Kontaktwiderstand an der Grenzfläche Bipolarplatte und Gasdiffusionsschicht. Edelmetalle wie Gold oder Platin zeigen sehr geringe Kontaktwiderstände, da sie keiner Oberflächenpassivierung unterliegen. Jedoch kommen Edelmetalle aus Kostengründen in der Regel nicht als Bipolarplattenmaterial in Frage. Bei kostengünstigen Edelstählen und nickel- und chrombasierten Legierung hat der Kontaktwiderstand einen enormen Einfluss auf die Leistung von Brennstoffzellen und Elektrolyseuren.

Des Weiteren wird die metallische Bipolarplatte durch die zumindest teilweise reduzierte Graphenoxid-Beschichtung räumlich vom chemischen Elektrolytangriff abgeschirmt. Dies setzt voraus, dass die reduzierte Graphenoxid-Beschichtung frei von Defekten, wie z. B. Rissen oder pinholes, ist. In Niedertemperatur-Brennstoffzellen und Elektrolyseuren herrschen typischerweise Betriebstemperaturen von 80 - 90 °C und es liegt eine schwefelsaure wässrige Umgebung (i. d. R. < 0,5 M H₂SO₄) vor. Bei Hochtemperatur-Brennstoffzellen und Elektrolyseuren liegen höhere Betriebstemperaturen von 120 - 180 °C und Aziditäten von ~16 M H₃PO₄ vor. Es hat sich herausgestellt, dass die erfindungsgemäße "graphen-ähnliche" Beschichtung der Bipolarplatte gegenüber den vorgenannten Temperaturen und den sauren Umgebungsbedingungen stabil ist.

Neben der chemischen Korrosionsstabilität gegenüber dem korrosiven Elektrolyt, zeigt die zumindest teilweise reduzierte Graphenoxid-Beschichtung auch eine hohe elektrochemische Stabilität bei äußeren Potentialen bis 1 V bei Brennstoffzellen und 2,2 V bei Elektrolyseuren. Angegebene Potentialwerte werden gegen die reversible Wasserstoffelektrode als Referenzstandard gemessen. Die Verminderung der anodischen Korrosionsstromdichten beim äußeren Potential durch die erfindungsgemäß reduzierte Graphenoxid-Beschichtung ist eine entscheidende Verbesserung gegenüber bislang üblichen graphitischen Kompositmaterialien, unbeschichteten metallischen Werkstoffen sowie literaturbekannten Beschichtungskonzepten.

Zudem weist die erfindungsgemäß zumindest teilweise reduzierte Graphenoxid-Beschichtung höhere Ausdehnungskoeffizienten als literaturbekannte graphitische und keramische Beschichtungskonzepte auf. Bei den oben genannten Betriebstemperaturen von Brennstoffzellen und Elektrolyseuren erfährt die metallische Bipolarplatte eine messbare Materialausdehnung, die bei starren und unelastischen Beschichtungen nachteilig zu Rissen und Abplatzungen führen kann. Dies führt zwangsläufig zu Korrosionserscheinungen, einem Anstieg des Kontaktwiderstands und folglich zur Abnahme der Zellleistung. Der hohe Elastizitätsmodul der erfindungsgemäß zumindest teilweise reduzierten Graphenoxid-Schichten verhindert regelmäßig die temperaturabhängige Degradation der Beschichtung. Biegeversuche von beschichteten metallischen Substraten haben zudem gezeigt, dass selbst bei einer Biegung von bis zu 45° keine Defekte (Risse und Abplatzungen) der zumindest teilweisen reduzierten Graphenoxid-Beschichtung zu beobachten sind.

Als Material für eine geeignete metallische Bipolarplatte kommen alle bislang üblichen metallischen Werkstoffe umfassend eisenbasierte Stähle, austenitische Edelstähle sowie Legierungen mit einem hohen Chrom-, Nickel- und/oder Molybdänanteilen und Zugaben von Niob, Titan und/oder Kupfer, Mangan, Wolfram, Tantal und Vanadium, Kupferlegierungen sowie Edelmetalle, wie Gold und Platin in Betracht.

Die auf der metallischen Bipolarplatte hergestellte erfindungsgemäße graphen-ähnliche Beschichtung weist vorteilhaft eine sehr gute Haftung auf dem metallischen Werkstoff der Bipolarplatte auf. Ferner hat sich herausgestellt, dass diese Beschichtung vorteilhaft flexibel ist. Zudem kann die Korrosionsbeständigkeit in sauren oder basischen Medien, bei hohen Temperaturen und elektrischen/elektrochemischen Potentialen im Vergleich zu einer unbeschichteten metallischen Bipolarplatte deutlich gesteigert werden.

Da die erfindungsgemäße graphen-ähnliche Beschichtung auch eine ausreichend gute elektrische Leitfähigkeit aufweist, kann sie vorteilhaft als aussichtsreiche Beschichtung für metallische Bipolarplatten für den Einsatz in Brennstoffzellen und Elektrolyseuren, d. h. allgemein in elektrochemischen Zellen, verwendet werden. Dadurch eröffnen sich komplett neue Designmöglichkeiten, die nicht auf graphitische Materialien übertragbar sind. Da metallische Bipolarplatten in der Regel eine Materialstärke von ~ 100 µm betragen (vgl. graphitische Kompositmaterialien > 2 mm), können mit der erfindungsgemäßen graphen-ähnlichen Beschichtung deutlich höhere gravimetrische und volumetrische Leistungsdichten eines Brennstoffzellen-/Elektrolysestacks erzielt werden.

Außerdem ist die erfindungsgemäße graphen-ähnliche Beschichtung über das vorgenannte Beschichtungsverfahren zu erzeugen, welches im Vergleich zu bekannten alternativen Beschichtungstechnologien, z. B. der aufwändigen physikalischen bzw. chemischen Gasphasenabscheidung, deutlich einfacher und kostengünstiger ausfällt.

Vorteilhaft ist die erfindungsgemäße graphen-ähnliche Beschichtung nicht nur auf den Einsatz in elektrochemischen Zellen beschränkt. Weitere Anwendungen der erfindungsgemäßen graphen-ähnlichen Beschichtung sind allgemein die Beschichtung von korrosionsgefährdeten metallischen Bauteilen, wie Pipelines, Schiffsrümpfe Fahrzeugkarosserien, metallische elektrochemische und chemische Reaktoren, etc. oder auch von Stahlbauteilen an Gebäuden, insbesondere an Brücken und ähnlichen Bauten.

### Spezieller Beschreibungsteil

Nachfolgend wird der Gegenstand der Erfindung beispielhaft anhand von einigen Figuren zu Bipolarplatten näher erläutert, ohne ihn dadurch einzuschränken.

Die Anforderungen, die an eine Bipolarplatte für den Einsatz in einer elektrochemischen Zelle gestellt werden, sind einerseits eine hohe chemische und elektrochemische Stabilität im Umfeld der Zelle, eine ausreichende elektronische und thermische Leitfähigkeit, eine hohe Duktilität sowie die Möglichkeit einer Serienfertigung.

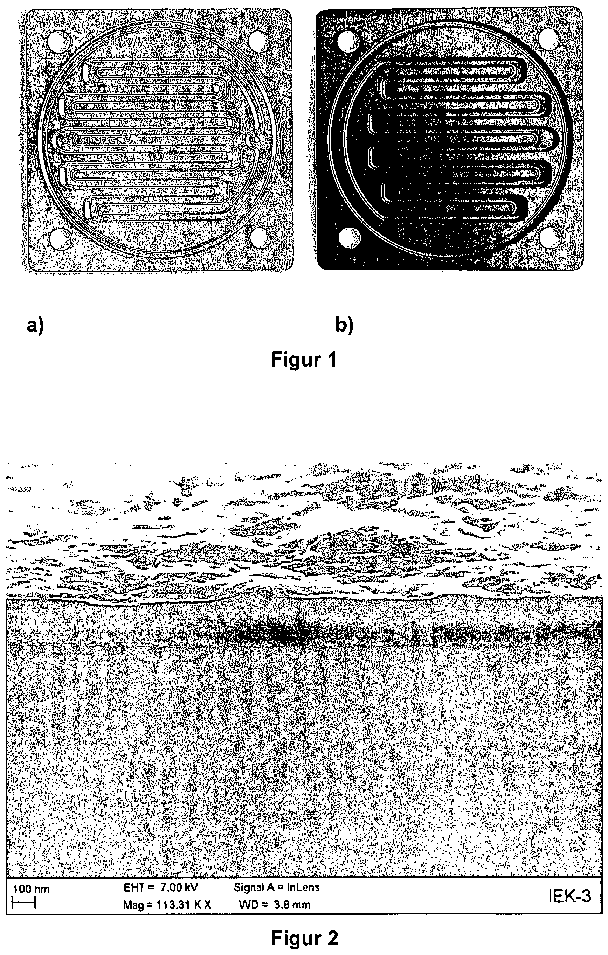

Die Figur 1 a zeigt eine metallische Bipolarplatte (Werkstoff 1.4404) mit geprägter Kanalstruktur (engl. flow field) ohne erfindungsgemäße reduzierte Graphenoxid-Beschichtung.

Die Figur 1 b zeigt demgegenüber eine metallische Bipolarplatte (Werkstoff 1.4404) mit geprägter Kanalstruktur (engl. flow field) mit einer erfindungsgemäßen zumindest teilweise reduzierten Graphenoxid-Beschichtung. Die Aufbringung erfolgte mittels Sprühverfahren unter Verwendung einer wässrigen Graphenoxid-Suspension mit einer Konzentration von 2 mg/ml. Die Reduktion zu den reduzierten Graphenoxid-Schichten wurde thermisch auf einer Heizplatte bei Temperaturen bis zu 500 °C durchgeführt. Nach jedem Sprühvorgang wurde dabei die aktuell aufgebrachte Schicht thermisch reduziert, bevor der nächste Beschichtungsvorhang folgte. Die Gesamtschichtdicke beträgt bei dieser Bipolarplatte 250 nm.

Die Figur 2 zeigt einen Querschnitt der metallischen Bipolarplatte (Werkstoff 1.4404) mit der erfindungsgemäßen graphen-ähnlichen Beschichtung. Aufbringungs- und Reduktionsmethode (thermisch-reduziert) analog zu Figur 1. Die Gesamtschichtdicke beträgt auch hier ca. 250 nm. Querschnitte wurde mittels lonenpoliertechnik präpariert.

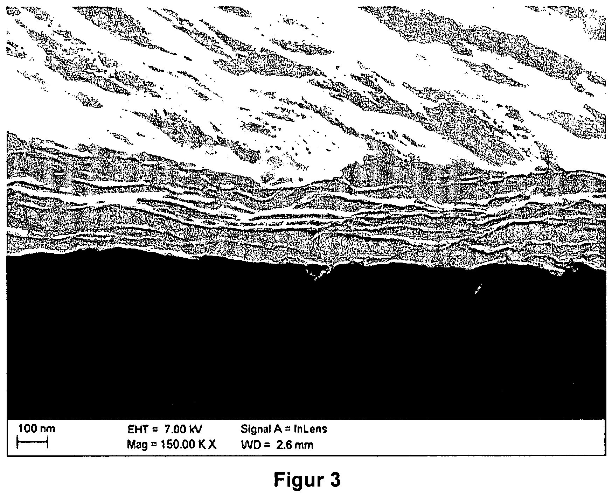

Die Figur 3 zeigt einen Querschnitt der metallischen Bipolarplatte (Werkstoff 1.4404) mit einer erfindungsgemäßen thermisch-reduzierten Graphenoxid-Beschichtung. Aufbringungs- und Reduktionsmethode vergleichbar wie bei der Figur 1. Die Schichtdicke beträgt hier ca. 250 nm. Der Querschnitt wurde mittels Skalpellschnitt präpariert. Es ist deutlich der Schichtaufbau von einzelnen reduzierten Graphenoxidlagen zu erkennen.

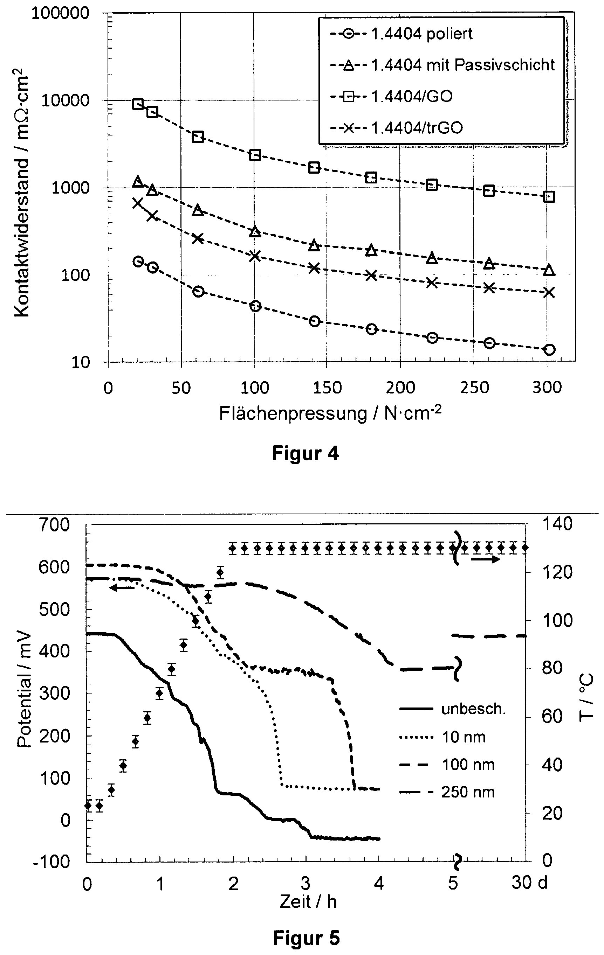

Die Figur 4 zeigt den Kontaktwiderstand zwischen unbeschichteten und beschichteten Bipolarplatte und anliegender Gasdiffusionsschicht (Kohlenstoffvlies) in Abhängigkeit vom Anpressdruck. Die erfindungsgemäße thermisch-reduzierte Graphenoxid-Beschichtung auf Werkstoff 1.4404 (trGO/1.4404) mit einer Schichtdicke von 200 nm zeigt vorteilhaft eine Reduktion des Kontaktwiderstands um mehr als eine Größenordnung verglichen mit einer nicht reduzierten Graphenoxid-Beschichtung auf 1.4404 (GO/1.4404). Zum Vergleich ist der Kontaktwiderstand einer unbeschichteten Bipolarplatte aus Werkstoff 1.4404 mit einer natürlich an Luftsauerstoff gebildeten Oberflächenpassivierungsschicht und mit einer mechanisch abgetragenen (polierten) Oberfläche dargestellt. Das Materialmuster 1.4404 wurde direkt nach der mechanischen Politur gemessen. Da die Oberflächenpassivierung jedoch innerhalb von wenigen Stunden an Luftsauerstoff bzw. in wässrigen sowie sauerstoffhaltigen Lösungen stattfindet, zeigt das Materialmuster 1.4404 mit Passivschicht die im Betriebsfall zu erwarteten Kontaktwiderstände in Brennstoffzellen bzw. Elektrolyseuren.

Der Kontaktwiderstand von thermisch-reduzierten Graphenoxid-Schichten auf dem Werkstoff 1.4404 (trGO/1.4404) mit einer Schichtdicke von ~100 nm nimmt nach der thermischen Reduktion von 1700 mΩ cm² auf 120 mΩ cm² bei einem Anpressdruck von 140 N cm⁻² und von 775 mΩ cm² auf 62 mΩ cm² bei einem Anpressdruck von 300 N cm⁻² um mehr als eine Größenordnung ab im Vergleich zu nicht reduzierten Graphenoxid-Schichten (GO/1.4404). Dabei ist der Kontaktwiderstand von trGO/1.4404 sogar geringer als vom unbeschichteten Werkstoff 1.4404, der an Luftsauerstoff passiviert ist. Es hat sich gezeigt, dass im Brennstoffzellenbetrieb Kontaktwiderstände < 100 mΩ cm² notwendig sind. Diese Vorgabe kann für die erfindungsgemäß erzeugten thermisch-reduzierten Graphenoxid-Schichten auf einer Bipolarplatte erreicht werden.

Die Figur 5 zeigt im Langzeitversuch von 30 Tagen den Verlauf des freien Korrosionspotentials bei einem Temperaturanstieg auf 130 °C. Der Versuch wurde in einer Drei-Elektroden-Messzelle in 175 ml 85 Gew.-%-iger H₃PO₄ durchgeführt. Beim unbeschichteten Werkstoff 1.4404 ist eine schnelle Degradation der Passivschicht zu erkennen, die mit dem Abfall des freien Korrosionspotentials mit steigender Temperatur einhergeht. Der Temperaturanstieg ist im Diagramm durch Rauten mit einer Temperaturschwankung von 5 °C dargestellt. Die thermisch zumindest teilweise reduzierten Graphenoxid Beschichtungen auf Werkstoff 1.4404 mit einer Dicke von 10 nm und 100 nm zeigen bei diesen drastischen Bedingungen eine nur geringfügige Verbesserung. Thermisch-reduzierte Graphenoxid-Schichten mit einer Dicke von ca. 250 nm weisen hingegen selbst nach 30 Tagen ein Korrosionspotential von 435 mV (vs. reversible Wasserstoffelektrode) auf. Dies ist ein Anzeichen dafür, dass die Metalloberfläche der Bipolarplatte unter der Beschichtung effektiv vor einem Säureangriff geschützt wird. Unter realen Brennstoffzellen-/Elektrolysebedingungen befinden sich in der Regel deutlich geringere Elektrolytmengen (~ 1 mg/cm²) in Kontakt mit der Bipolarplatte, so dass in diesen Fällen auch geringere Schichtdicken ausreichend sind, um das Metallsubstrat vor Korrosion zu schützen.

Als ein weiterer Versuch wurde ein potentiodynamischer Korrosionstest in 175 ml 1 M H₃PO₄ bei Raumtemperatur in einer elektrochemischen Drei-Elektroden-Messzelle durchgeführt. Nach 100 Zyklen im Potentialbereich 0 - 1,3 V (vs. reversible Wasserstoffelektrode) mit einer Scangeschwindigkeit von 100 mV/s hatte sich eine unbeschichtete Kupferprobe mit einer Dicke von 100 µm (als mögliches Bipolarplattenmaterial) vollständig aufgelöst, während eine mit thermisch zumindest teilweise reduziertem Graphenoxid (trGO) beschichtete Kupferprobe (als Ausgestaltung einer erfindungsgemäßen Bipolarplatte) nur an den Randbereichen leichte Defekte zeigte. Dies kann unter anderem dadurch erklärt werden, dass der Dichtungsring beim Deassemblieren der Messzelle die thermisch-reduzierte Graphenoxid-Beschichtung beschädigt hatte.

Zur Herstellung der Graphenoxid (GO)-Suspension wurde die nachfolgend beschriebene chemische Synthese durchgeführt. Die Funktionalisierung von Graphit mit hydrophilen Gruppen (u.a. Epoxy, Hydroxy- und Carboxygruppen) mit anschließender Ultraschalldispergierung sorgt für eine stabile Graphenoxid (GO)-Suspension, die nach dem Beschichtungsvorgang, wie oben bereits beschrieben wurde, reduziert wird. Durch den Austrag der hydrophilen Gruppen wird das aromatische System zurückgebildet.

### Beispielhafte Synthese (modifizierte Synthese nach Hummer):

Graphit in Rundkolben vorlegen, mit 400 ml H₂SO₄/H₃PO₄ (360/40 ml) versetzen und rühren. Danach langsam portionsweise KMnO₄ zugeben, so dass die Temperatur relativ konstant bleibt. Im Eisbad kühlen, da die Reaktion stark exotherm ist. Im Anschluss auf 50 °C temperieren und 18 h rühren. Dann auf Raumtemperatur abkühlen lassen und auf 500 ml Eis geben. Anschließend 7 ml 27 %-ige H₂O₂ zugeben. Daraufhin das so erhaltene Graphitoxidpulver zentrifugieren, mehrmals mit Ethanol und Wasser waschen und trocknen. Es folgt die direkte Ultraschalldispergierung des Graphitoxidpulvers mittels Sonotrode in einem protischen polaren Lösemittel (60 min pro 100 ml Suspension bei 1 mg/ml Konzentration mit Intensität von ca. 100 W/cm² Sonotrodenfläche). Zum Schluss erneut Zentrifugieren und Trocknen (Produkt Graphenoxid-Partikel). In Form einer Suspension direktes Beschichten des Substrats möglich.

Die zumindest teilweise Reduktion des Graphenoxids zu Graphen erfolgt in einer einfachen Ausgestaltung des Verfahrens in einem Ofen oder auf einer Heizplatte vorzugsweise in Schutzgasatmosphäre (Stickstoff, Argon) oder an Luftsauerstoff im Temperaturbereich von 200 - 500 °C. Durch die thermische Energiezufuhr werden funktionelle Gruppen reduziert (Entweichen von CO/CO₂) und Rückbildung des aromatisches Systems. Dies konnte durch thermogravimetrische Analysen (TGA) bestätigt werden. Durch eine Überprüfung mittlels XPS-Spektroskopie kann zudem eindeutig unterschieden werden, ob die auf einer Bipolarplatte aufgebrachte Beschichtung Graphen, Graphitoxid oder die erfindungsgemäße graphen-ähnliche Beschaffenheit aufweist.

Auch andere Methoden zur Herstellung der Graphenoxid (GO)-Suspension wurden getestet. Die Chemische Synthese erfolgt mit einem starken Reduktionsmittel wie z. B. Hydrazin in Lösung oder in der Gasphase. Graphenoxidschichten werden mittels Hydrazin zu chemischreduzierten Graphenoxidschichten (crGO) reduziert. Die elektrochemische Reduktion von Graphenoxid-Schichten zu elektrochemisch-reduzierten Graphenoxidschichten (erGO) erfolgte in einem Elektrolyten (z. B. Kaliumdihydrogenphosphat) im kathodischen Polarisationsbereicht (bis -1 V vs. reversible Wasserstoffelektrode). Als nachteilig bei der chemischen und elektrochemischen Reduktion sind zu nennen, dass Verunreinigung der Beschichtung mit Fremdionen des Reduktionsmittels auftreten. In Brennstoffzellen/Elektrolyseuren kann dies zu Verunreinigung der Polymerelektrolytmembran oder des Katalysators führen. Die laserinduzierte Reduktion erfolgt durch die direkte Bestrahlung der Graphenoxid-Beschichtung mittels eines Laserstrahls. Dazu sind Anpassungen von Intensität, Energie, Pulsdauer, etc. notwendig, um einerseits eine effektive Reduktion zu laserreduzierter Graphenoxid-Beschichtung (LrGO) zu erzielen und andererseits eine Beschädigung der Beschichtung zu vermeiden.

Die chemische und elektrochemische Reduktion bringen somit nachteilig Verunreinigungen in die Beschichtung und bei der Laserreduktion wurden häufig partielle Defekte hervorgerufen. Im Rahmen dieser Erfindung wird daher insbesondere die thermische Reduktion als besonders einfach und effektiv und insofern als besonders vorteilhaft betrachtet.

## Patentansprüche

1. Verfahren zur Herstellung einer Bipolarplatte, mit den Schritten,
- Graphitoxid wird in Wasser gelöst und mit Ultraschall behandelt, wodurch eine homogene kolloidale Suspension umfassend Flocken aus nicht leitfähigen Graphenoxid entsteht,
- diese wird auf eine metallische Bipolarplatte aufgebracht, so dass wenigstens eine elektrisch nicht leitende Graphenoxid-Schicht erzeugt wird,
- die aufgebrachte Graphenoxid-Schicht wird oder die aufgebrachten Graphenoxid-Schichten werden einem Reduktionsschritt unterworfen, so dass eine zumindest teilweise reduzierte, elektrisch leitfähige graphen-ähnliche Beschichtung erzeugt wird.

2. Verfahren nach Anspruch 1,
bei dem nach jeder aufgebrachten Graphenoxid-Schicht ein Reduktionsschritt erfolgt.

3. Verfahren nach einem der Ansprüche 1 bis 2,
bei dem das Aufbringen der stabilen Suspension umfassend Graphenoxid über ein Spray, - Dip- oder Spin-Coating-Verfahren erfolgt.

4. Verfahren nach einem der Ansprüche 1 bis 3,
bei dem die Reduktion der abgeschiedenen Graphenoxid-Schicht chemisch, elektrochemisch, durch Laser-induziert oder thermisch erfolgt.

5. Verfahren nach einem der Ansprüche 1 bis 4,
bei dem für die thermische Reduktion Temperaturen bis max. 500 °C eingesetzt werden.

6. Verfahren nach einem der Ansprüche 1 bis 5,
bei dem eine metallische Bipolarplatte umfassend eine Legierung mit Chrom-, Nickel- und/oder Molybdänanteilen, eine Kupferlegierung, ein Edelmetall, einen austenitischen Edelstahl mit Zugaben von Wolfram, Tantal und/oder Lanthan, oder einen ferritischen chromhaltigen Stahl mit geringen Anteilen an Hafnium, Wolfram, Tantal und/oder Vanadium eingesetzt wird.

7. Verfahren nach einem der Ansprüche 1 bis 6,
bei dem eine Reduktion des Sauerstoffanteils in der abgeschiedenen Graphenoxid-Schicht um mehr als 50 %, insbesondere um mehr als 75 % erfolgt.

8. Metallische Bipolarplatte für den Einsatz in einer elektrochemischen Zelle,
hergestellt nach einem der Ansprüche 1 bis 7,
**dadurch gekennzeichnet,**
**dass** die Bipolarplatte eine elektrisch leitfähige graphen-ähnliche Beschichtung aufweist, die aus einer oder mehreren Graphenoxid-Schichten besteht, die zumindest teilweise reduziert vorliegen.

9. Metallische Bipolarplatte nach Anspruch 8,
bei der die graphen-ähnliche Beschichtung eine Schichtdicke zwischen 10 nm und 1 µm aufweist.

10. Metallische Bipolarplatte nach einem der Ansprüche 8 bis 9, umfassend eisenbasierte Stähle, austenitische Edelstähle sowie Legierungen mit einem hohen Chrom-, Nickel- und/oder Molybdänanteilen und Zugaben von Niob, Titan und/oder Kupfer, Mangan, Wolfram, Tantal und Vanadium, Kupferlegierungen sowie Edelmetalle, wie Gold und Platin.

## Claims

1. Method for producing a bipolar plate, comprising the steps:
- graphite oxide is dissolved in water and treated with ultrasound, forming a homogeneous colloidal suspension comprising flocs of non-conductive graphene oxide
- this is applied to a metallic bipolar plate, so that at least one electrically non-conductive graphene oxide layer is produced,
- the applied graphene oxide layer or layers is or are subjected to a reduction step so that an at least partially reduced, electrically conductive graphene-like coating is produced.

2. Method according to claim 1, in which a reduction step is performed after each applied graphene oxide layer.

3. Method according to one of claims 1 to 2, in which the stable suspension comprising graphene oxide is applied by means of a spray, dip or spin coating process.

4. Method according to one of claims 1 to 3, in which the reduction of the deposited graphene oxide layer is carried out chemically, electrochemically, laser-induced or thermally.

5. Method according to one of claims 1 to 4, in which temperatures of up to max. 500 °C are used for the thermal reduction.

6. Method according to one of claims 1 to 5, in which a metallic bipolar plate is used which comprises an alloy with chromium, nickel and/or molybdenum contents, a copper alloy, a precious metal, an austenitic stainless steel with additions of tungsten, tantalum and/or lanthanum, or a ferritic chromium-containing steel with small contents of hafnium, tungsten, tantalum and/or vanadium.

7. Method according to one of claims 1 to 6, in which the oxygen content in the deposited graphene oxide layer is reduced by more than 50 %, in particular by more than 75 %.

8. Metallic bipolar plate for use in an electrochemical cell, produced according to one of claims 1 to 7, **characterized in that** the bipolar plate has an electrically conductive graphene-like coating which consists of one or more graphene oxide layers which are at least partially reduced.

9. Metallic bipolar plate according to claim 8, in which the graphene-like coating has a layer thickness of between 10 nm and 1 µm

10. Metallic bipolar plate according to one of claims 8 to 9, comprising iron-based steels, austenitic stainless steels and alloys with high chromium, nickel and/or molybdenum contents and additions of niobium, titanium and/or copper, manganese, tungsten, tantalum and vanadium, copper alloys and precious metals such as gold and platinum.

## Revendications

1. Procédé de fabrication d'une plaque bipolaire, avec les étapes,
- de l'oxyde de graphite est dissous dans de l'eau et traité par ultrasons, ce qui produit une suspension colloïdale homogène comprenant des flocons d'oxyde de graphène non conducteur,
- celle-ci est posée sur une plaque bipolaire métallique, de sorte qu'au moins une couche d'oxyde de graphène électriquement non conductrice est produite,
- la couche d'oxyde de graphène posée est soumise à une étape de réduction, ou les couches d'oxyde de graphène posées sont soumises à une étape de réduction, de sorte qu'un revêtement semblable à du graphène, électriquement conducteur et au moins partiellement réduit, est produit.

2. Procédé selon la revendication 1,
dans lequel une étape de réduction est effectuée après chaque couche d'oxyde de graphène posée.

3. Procédé selon l'une des revendications 1 à 2,
dans lequel la pose de la suspension stable comprenant de l'oxyde de graphène est réalisée par un procédé de revêtement par pulvérisation, immersion ou centrifugation.

4. Procédé selon l'une des revendications 1 à 3,
dans lequel la réduction de la couche d'oxyde de graphène déposée s'effectue par voie chimique, électrochimique, par induction laser ou par voie thermique.

5. Procédé selon l'une des revendications 1 à 4,
dans lequel on utilise pour la réduction thermique des températures allant jusqu'à 500 °C au maximum.

6. Procédé selon l'une des revendications 1 à 5,
dans lequel on utilise une plaque bipolaire métallique comprenant un alliage avec des proportions de chrome, de nickel et/ou de molybdène, un alliage de cuivre, un métal précieux, un acier inoxydable austénitique avec des ajouts de tungstène, de tantale et/ou de lanthane, ou un acier ferritique contenant du chrome avec de faibles proportions de hafnium, de tungstène, de tantale et/ou de vanadium.

7. Procédé selon l'une des revendications 1 à 6,
dans lequel on effectue une réduction de la teneur en oxygène dans la couche d'oxyde de graphène déposée de plus de 50 %, en particulier de plus de 75 %.

8. Plaque bipolaire métallique pour utilisation dans une
cellule électrochimique,
fabriquée selon l'une des revendications 1 à 7,
**caractérisée en ce**
**que** la plaque bipolaire présente un revêtement semblable à du graphène électriquement conducteur, qui est constitué d'une ou plusieurs couches d'oxyde de graphène, qui se présentent au moins partiellement réduites.

9. Plaque bipolaire métallique selon la revendication 8,
dans laquelle le revêtement semblable à du graphène présente une épaisseur de couche comprise entre 10 nm et 1 µm.

10. Plaque bipolaire métallique selon l'une des revendications 8 à 9,
comprenant des aciers à base de fer, des aciers inoxydables austénitiques ainsi que des alliages avec des proportions élevées de chrome, de nickel et/ou de molybdène et des ajouts de niobium, de titane et/ou de cuivre, de manganèse, de tungstène, de tantale et de vanadium, d'alliages de cuivre ainsi que de métaux précieux, comme l'or et le platine.
